# EUROPEAN PATENT SPECIFICATION

(11) **EP 3 382 287 B1**
(45) Date of publication and mention of the grant of the patent: **10.05.2023**
(21) Application number: 17164119.4
(22) Date of filing: 31.03.2017
(51) Int. Cl.: F24D 19/00, F24D 19/06, F24F 1/00

(54) **FAN COIL UNIT**
LÜFTERSPULENEINHEIT
UNITÉ DE BOBINE DE VENTILATEUR

(43) Date of publication of application: 03.10.2018
(73) Proprietor: Mitsubishi Electric R&D Centre Europe B.V., Livingston EH54 5DJ (GB); Mitsubishi Electric Corporation, Tokyo 100-8310 (JP)
(72) Inventor: WU, Duan, Livingston, EH54 5DJ (GB)
(74) Representative: Pfenning, Meinig & Partner mbB

(56) References cited:
- EP-A1- 1 361 398
- WO-A1-2004/020913
- CN-A- 104 296 243
- GB-A- 2 106 638
- US-B1- 6 659 170

## Description

The invention relates to a fan coil unit being adapted to be mounted on a vertical wall, the fan coil unit having three outlet areas arranged beside each other on a top side of the housing, wherein a middle outlet area is arranged between two outer outlet areas and wherein the outer outlet areas are inclined by an angle greater than or equal 120° and smaller than or equal 160° with respect to the middle air outlet area, the angle being the smaller angle measured between the respective outer outlet area and the middle outlet area.

Conventional fan coil units or fan convector heating units, also referred to as fan-assisted radiators, comprise a heat exchanger fed by a central heating or hot water system of a building in which the fan convector is installed, and an electric fan is usually arranged to blow air over the heat exchanger. The operation of the fan is generally controlled by a built-in thermostatic switch responsive to room temperature changes.

Fan coil units are becoming more and more popular due to their forced convection heating effects which leads to the possibility of working with low flow temperature for achieving a satisfactory thermal comfort and a reduction of energy consumption. Generally, there are two types of fan coil units available on the market: fan coil units without radiant panel and fan coil units with radiant panel. For the type with radiant panel, the benefit is obvious as it allows for a better heat emission due to the radiant heating effects. Furthermore, the radiant heating will improve the comfort level in the living space.

A fan coil unit according to the preamble of claim 1 is known from document CN104296243A.

Generally, the issues are similar in the case where a room is to be heated and in the case where a room is to be cooled. For the sake of energy efficiency, it is usually desired to achieve a certain temperature in the heating or cooling operation using a temperature difference of a heat transport medium to the room temperature that is as small as possible. For this, high efficiency heat emitters are required, wherein the term "heat emitter" shall be understood as designating a unit for heating or for cooling a room.

It is therefore the object of the present invention to increase the efficiency of a fan coil unit compared to a fan coil unit of the prior art.

The object is achieved by the fan coil unit according to claim 1. The dependent claims describe advantageous embodiments of the fan coil unit according to claim 1.

The present invention is based on the insight that the efficiency of a heat emitter can be improved by improving the air flow distribution. Conventional emitters have squirrel fans or axial fans, which deliver heated air upwards or downwards. However, this leads a to a temperature distribution which is not very uniform. Some emitters are known which use vanes or deflectors to distribute air flowing out of the fan coil unit. However, the result achieved by such units is usually not satisfactory, or the units are very expensive.

The present invention concerns a fan coil unit which is adapted to be mounted on a vertical wall. The vertical direction in this sense is the direction in which gravity acts. The fan coil unit according to the present invention has a housing, wherein the housing has at least three outlet areas through which air can be expelled from the housing. Outlet areas may optionally be covered by a grill or a grating so that the grill or grating is arranged in or above the respective outlet area.

According to the invention the three outlet areas are arranged beside each other on a top side of the housing. The top side of the housing is that side of the housing which is located uppermost when the fan coil unit is mounted on a vertical wall. The three outlet areas are arranged beside each other such that a middle one of the outlet areas, called "middle outlet area", is arranged between the two other outlet areas, which in the following are designated as "outer outlet areas". Thus, the middle outlet area is arranged between the two outer outlet areas. The first outer outlet area is arranged at an opposite side of the middle outlet area compared to the second outer outlet area.

Said outlet areas may extend over a part of a side face of the housing or may constitute a side face of the housing, optionally excepting a frame extending around the outlet area. These side faces of the housing are here termed upper side faces, and a middle side face of these upper side faces can be arranged between two outer side faces of the upper side faces. The first outlet area may then be arranged in a first of the outer upperside faces, the middle outlet area may be arranged in the middle upper side face, and the second outer outlet area may be arranged in a second of said upper outer side faces.

In a preferred embodiment the upper side faces of the housing and/or the outlet areas may be rectangular or square.

According to the invention the two outer outlet areas are inclined by an angle greater than 120° and smaller than 160° with respect to the middle outlet area, wherein the angle is the smaller angle measured between the respective outer outlet area and the middle outlet area. The feature can alternatively also be described such that the two upper outer faces of the housing are inclined by an angle greater than 120° and smaller than 160° with respect to the upper middle side face of the housing, the angle being the smaller angle measured between the respective outer side face and the middle side face of the housing.

The tilting angle of the outer outlet areas or outer side faces can also be expressed as an angle between the respective outer outlet area or outer side face and a virtual straight connection line between the points where the outer outlet areas abut on vertical side faces of the housing. Angles measured this way can range, according to the invention, from 30° to 60°.

In an advantageous optional embodiment, the angle measured as described last may by 45°, corresponding to 125° when measured in the way as described first.

In an advantageous embodiment of the invention, the housing can have a flat shape with two main surfaces, the two main surfaces being arranged parallel to each other. Preferably, the two main surfaces are arranged such that they fully overlap, which means that one of the main surfaces lies completely above the other main surface when viewed in a direction perpendicular to the plane of the main surfaces.

In this case, the outlet areas and/or the top side faces of the housing can be arranged between the two main surfaces perpendicularly to the two main surfaces. In a case where the fan coil unit is mounted on the vertical wall, one of the main surfaces can abut on said wall and can be parallel to said wall. This main surface can also be regarded as a mounting surface for the fan coil unit.

Preferably, all surfaces mentioned in the context of this document may be plane surfaces.

Preferably, the angle by which the outer outlet areas or outer side faces of the housing are inclined with respect to the middle outlet area or middle side face is equal for both outer outlet areas and/or outer side faces.

A shape of the main surface can preferably be such that each main surface has a lower edge, which is parallel to the middle outlet area or middle side face of the housing, and two vertical edges, which are parallel to each other and perpendicular to the lower edge. On its upper side, the main surfaces can follow the shape described by the outer and middle outlet areas so that the upper edge of the main surface has three sections, two outer sections and a middle section, wherein the outer sections are inclined with respect to the middle section by the angle by which the outer outlet areas are inclined with respect to the middle outlet area.

In a preferred embodiment the housing can have two side surfaces which are arranged between the two main surfaces at edges of the main surfaces, preferably at the above-mentioned side edges. Each of said side surfaces may abut against one of the outer outlet areas or one of the outer side faces, and the side surfaces are preferably arranged perpendicularly to the middle outlet area or middle side face of the housing.

Preferably, the housing has at least one inlet area which is preferably arranged parallelly to the middle outlet area and which is preferably arranged on an opposite side of the housing compared to the middle outlet area. As the middle outlet area is arranged on a top side of the housing, the inlet area can be arranged on a lower side of the housing. It should be noted that inlet areas could also, in addition or alternatively, be arranged in the side surfaces of the housing.

When reference is made to a direction, such as "top" or "lower" or "side", this refers to a configuration where the fan coil unit is mounted vertically on a wall such that anything labeled as "upper" faces up and anything labeled "lower" faces down. The fan coil unit can also be defined without reference to the mounting wall. In this case, the direction in which the middle outlet area is arranged or in which air is blown through the middle outlet area during operation is defined as the "up" direction. The "down" direction would then be the opposite direction of the up direction.

According to the invention, the fan coil unit may comprise at least one fan which is arranged within the housing and which is adapted to blow air through the middle outlet area when in operation. It should be noted that other means for moving air can also be used in addition or alternatively to a fan, such as, for example, synjet units.

According to the invention, the fan coil unit comprises at least two fans, each of which is arranged such that it blows air through one of the outer outlet areas when in operation. Thus, in a preferred embodiment there is at least one fan for each outlet area, the fan being adapted to blow air through the corresponding outlet area when in operation.

According to the invention, the two fans which are arranged to respectively blow air through one of the outer outlet areas are arranged such that a blowing direction of the respective fan is perpendicular to the outlet area through which the respective fan blows air when in operation. A plane in which a propeller of the respective fan rotates can be parallel to the outlet area through which the respective fan blows when in operation. These planes of the outer fans may therefore be inclined with respect to the plane of the at least one fan of the middle outlet area by the same angle as the outer outlet areas are inclined with respect to the middle outlet area.

In a preferred embodiment, a channel may be formed within the housing, which channel extends from the fan to the corresponding outlet area through which the fan is adapted to blow air when in operation. The channel can be adapted to guide air from the fan toward the respective outlet area. The channel may for example be formed by side walls, or alternatively by a tube, extending between the fan and the corresponding outlet area.

Preferably, the fan coil unit comprises an air stream heat exchanger, which is arranged inside the housing such that air blown by the fans flows from the inlet opening via the air stream heat exchanger to the outlet areas. A suitable heat exchanger may, for example, be a tube fin heat exchanger. In such tube fin heat exchangers, tubes for conducting a heat transport medium such as water are arranged in a meandering manner between an inlet and an outlet with sections where the tube runs parallel to other sections of the same tube. Fins, which may for example be plane rectangular sheets of metal, for example copper, can be arranged perpendicularly to the sections of the pipe and parallel to and overlapping with each other. As the pipe runs in a meandering manner, it may pass through each of the fins multiple times. The side edges of the fins may, for example, be arranged such that they lie on the surface of a common cuboid. The sections of the tubes where the tubes run parallel to each other may then run parallel to side edges of said cuboid.

In a preferred embodiment, the fan coil unit may comprise at least one radiant or radiator panel. The radiator panel can be one of said main surfaces or can be arranged in contact with or above one of the main surfaces parallel to the respective main surface. A radiator heat exchanger can be arranged in contact with the radiant panel. The radiant panel may be a rectangular plane plate, comprising for example metal. The heat exchanger, called radiator heat exchanger, can be arranged in thermally conductive contact with the radiant panel so that heat from the radiator heat exchanger can be radiated by the radiant panel, or the radiant panel can be cooled by the radiator heat exchanger.

In an advantageous embodiment the radiant panel may be made by compressing two metallic sheets which have mirrored pre-formed half tube shape on both sides. After being compressed a hollow channel may be formed for passing the fluid flow, or by welding copper or other metallic tubes to a flat panel.

In a preferred embodiment, the radiator heat exchanger and the above-mentioned air stream heat exchanger can be connected in series, such that a heat transport medium, for example water, can consecutively flow through the radiator heat exchanger and the air stream heat exchanger.

In the following, the invention will be described by referring to the accompanying drawings. Features described with respect to a specific figure may be realized independently from the other features found in the respective figure and may be combined across the individual figures. Like reference signs denote like features in the different figures.

There is shown in
- Fig. 1: a fan coil unit according to the present invention,
- Fig. 2: a radiant panel of a fan coil unit according to the present invention,
- Fig. 3: an example of a circular tube fin heat exchanger which can act as an air stream heat exchanger, and
- Fig. 4: a comparison of a temperature distribution as achieved by a conventional fan coil unit and as achieved by a fan coil unit according to the present invention,
- Fig. 5: an exemplary house for testing the invention.

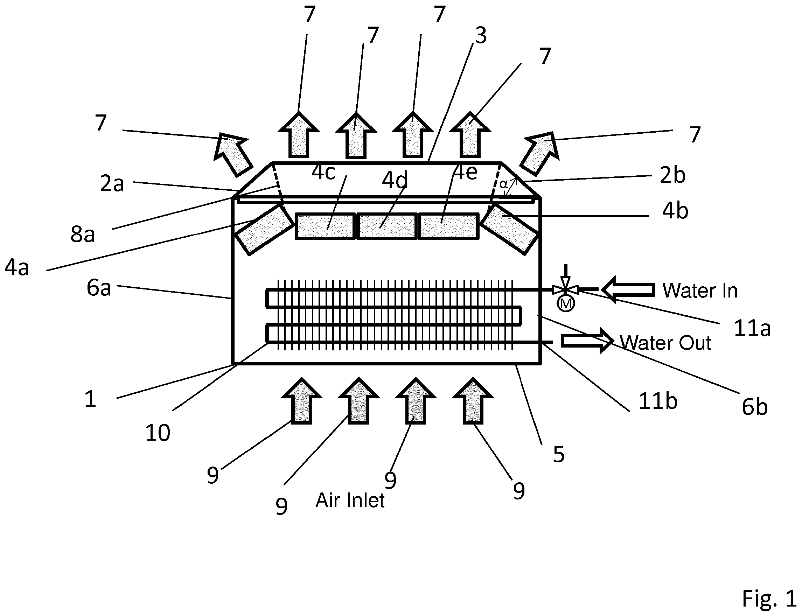

Fig. 1 shows an example of a fan coil unit according to the present invention. The fan coil unit is adapted to be mounted on a vertical wall, which is not shown in the figure but would be parallel to the plane of the figure. The fan coil unit has a housing 1. The housing 1 has three outlet areas 2a, 2b, and 3, which are arranged beside each other on a top side of the housing 1. The middle outlet area 3 of said outlet areas is arranged between the two outer outlet areas 2a and 2b of the outlet areas. As shown in the figure, the two outer outlet areas are inclined with respect to the middle outlet area 3. The angle by which the outer outlet areas 2a, 2b are inclined with respect to the middle outlet area 3 as shown in Fig. 1 ranges between 30° and 60°. The angle is measured here between the outer outlet areas 2a and 2b on the one hand and a horizontal line on the other hand. The same angle can also be defined between the outlet areas 2a or 2b on the one hand and the middle outlet area 3 on the other hand. The angle, which is then the smaller angle measured between the respective outer outlet area 2a or 2b and the middle outlet area 3, is preferably greater than or equal to 120° and smaller than or equal to 160°.

The housing 1 of the fan coil unit shown in Fig. 1 has a lower side face 5, which in Fig. 1 is assumed to be plane and rectangular and is oriented vertically to the plane of the figure. Furthermore, the housing 1 has two side faces 6a and 6b, which are also rectangular and plane and which are perpendicular to the lower side face 5 and parallel to each other. The side face 6a abuts on the tilted outlet area 2a, and the side face 6b abuts on the tilted outlet area 2b. The housing 1 furthermore comprises two main surfaces which are both parallel to each other and parallel to the plane of the figure. The main surfaces extend on the front side and the rear side in the viewing direction, that is, perpendicularly to the plane of the figure, between the side faces 5, 6a, 6b, 2a, 2b, and 3.

Within the housing 1, five fans 4a, 4b, 4c, 4d, 4e are arranged. Fan 4a is arranged to blow air through outlet area 2a, and fan 4b is arranged to blow air through outlet area 2b. Between fans 4a and 4b, the fans 4c, 4d, and 4e are arranged to blow air through the middle outlet area 3. The air blown through the outlet areas 2a, 2b, and 3 is shown by arrows 7. The air blown through the outer outlet areas 2a, 2b is blown out at an angle that is inclined with respect to the air 7 blown through the middle outlet area 3.

Guiding walls 8a, 8b are formed within the housing 1 between fan 4a and outlet area 2a on the left hand side and between fan 4b and outlet area 2b on the right hand side. These walls 8a and 8b guide the air 7 to flow through the respective outlet areas 2a and 2b.

The housing 1 has in its lower side face 5 at least one inlet opening through which air 9 can flow into the inside of the housing 1. The fans 4a, 4b, 4c, 4d, 4e can therefore effect a flow of air through the inlet opening in side face 5 and out of the outlet openings 2a, 2b, and 3 on the top side of the housing 1.

Inside the housing 1, an air flow heat exchanger 10 is provided. The air flow heat exchanger 10 is arranged in the housing 1 behind the inlet opening in the lower side face 5 such that air 9 flowing through the inlet opening into the housing 1 flows over the heat exchanger 10, then through the fans 4a, 4b, 4c, 4d, 4e and then through the outlet areas 2a, 2b, and 3.

The air flow heat exchanger 10 has an inlet 11a, through which water can flow into the heat exchanger 10, and an outlet 11b, through which the water can flow out of the heat exchanger.

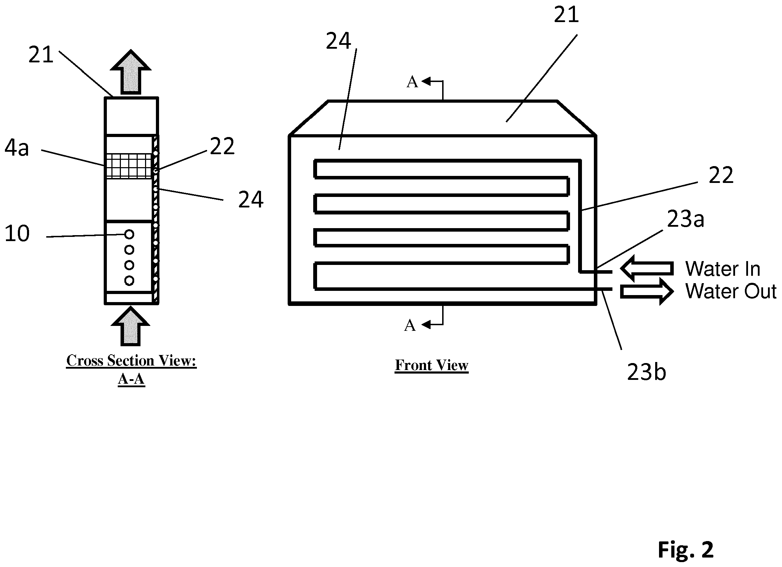

Fig. 2 shows an example of a fan coil unit having a radiant panel which is arranged in front of the fan coil unit as shown in Fig. 1. The left part of the figure shows a cross-sectional side view in a direction perpendicular to the viewing direction of the right part of figure 2. The fan coil unit has a housing 21 on a front side of which a radiant panel 24 including a heat exchanger 22 is arranged. The housing 21 can extend in a plane which is parallel to the plane of the figure.

It can be arranged such that this plane is parallel to the main surfaces of the housing 1 as shown in Fig. 1. The heat exchanger 22 of the radiant panel can be connected in series with the air flow heat exchanger 10 shown in Fig. 1. Thus, either an inlet 23a of the heat exchanger 22 or an outlet 23b of the heat exchanger can be connected to either the water inlet 11a or the water outlet 11b of the air flow heat exchanger 10. The heat exchanger 22 inside the radiant panel is guided in a meandering manner such that it extends in a plane which is parallel to a front surface of the radiant panel 24.

Thus, in a specific example the hydronic heat emitter, that is, the fan coil unit, of the invention may comprise a first hot/cold water circuit combined with a heat exchanger and a fan, a radiant panel in which a second hot/cold water circuit can be installed, and a controller for modulating the air temperature by changing the water flow rate. The heat exchanger and the radiant panel can be operated alone or simultaneously in series depending on the operating conditions. As shown, the side/top edges of the emitter can be sloped, the fan can be placed in parallel with the edge in this region, and air can be supplied obliquely upward.

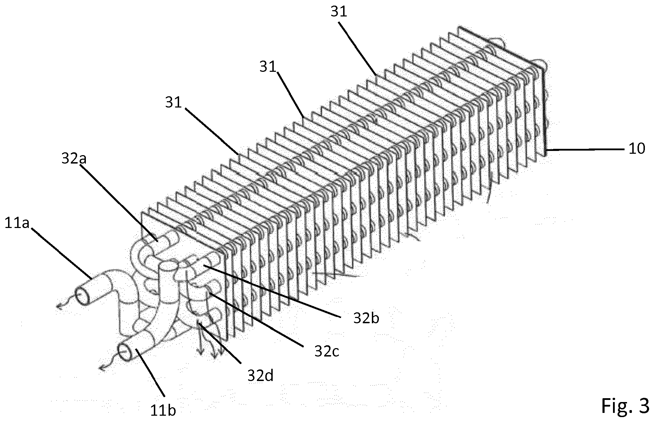

Fig. 3 shows an example of an air stream heat exchanger 10. The heat exchanger 10 comprises a plurality of fins 31, which are rectangular metal plates arranged parallel to each other and overlapping each other. As all fins 31 have the same size and shape, the edges of the fins constitute the side faces of an imaginary cuboid. Multiple parallel tubes 32a, 32b, 32c, 32d break through the fins 31 and are in thermal contact with the fins 31. The tubes 32a, 32b, 32c, 32d in the region between the outermost fins 31 extend straight and parallel to each other in a direction perpendicular to the plane of the fins 31. All tubes 32a, 32b, 32c, 32d start in a common water inlet 11a and end in a common water outlet 11b.

Such a heat exchanger allows a heat exchange between inlet air and a heat transport medium such as water. The heat exchanger can be regarded as a grid of water pipes.

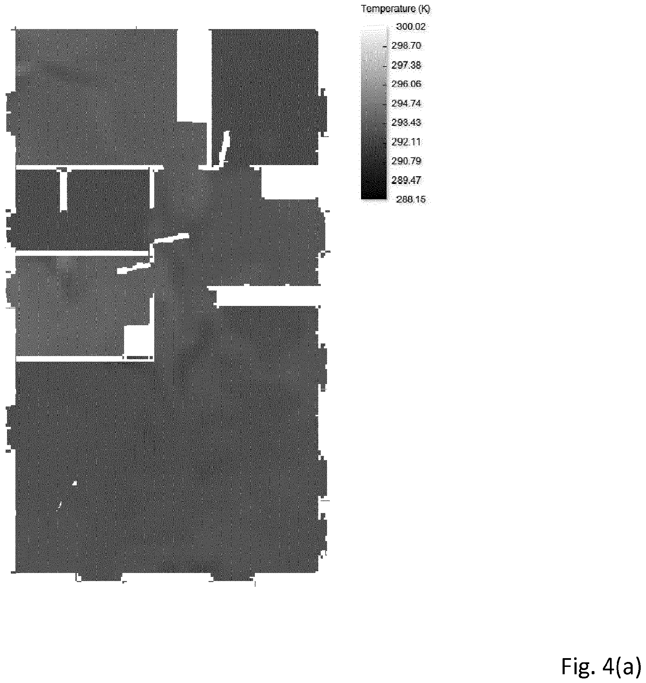

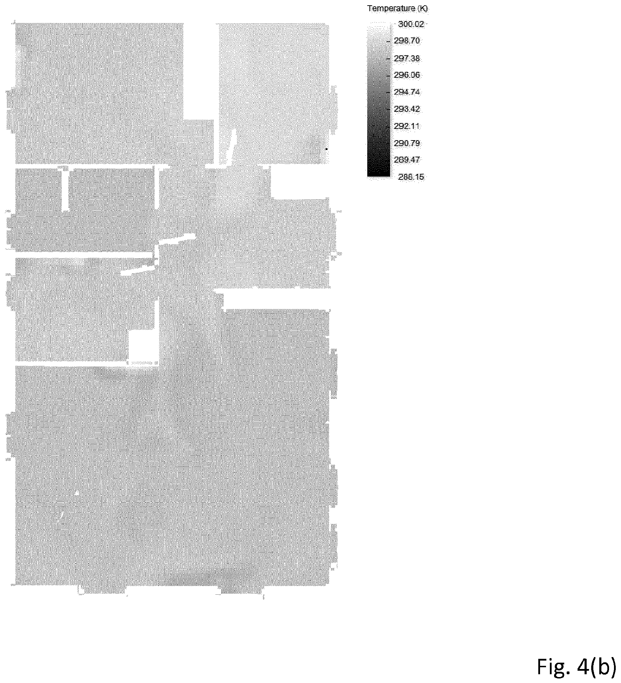

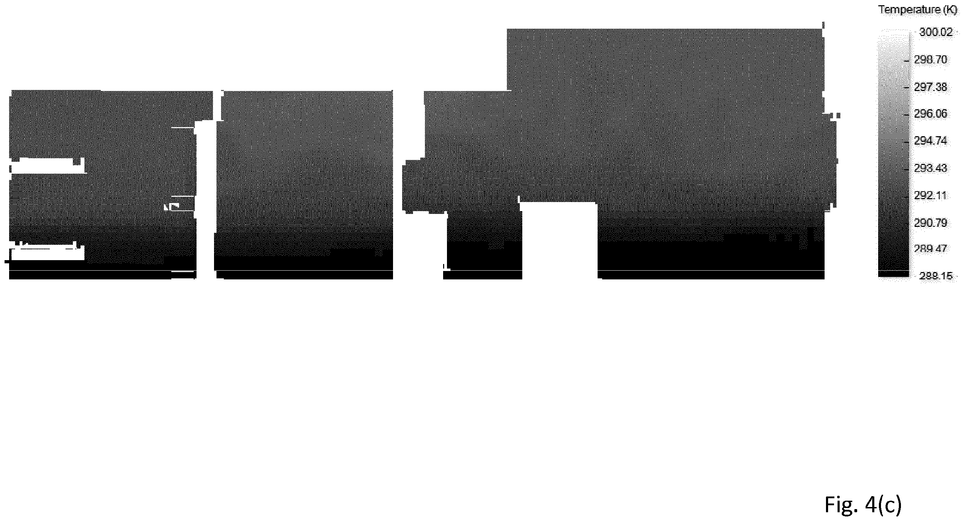

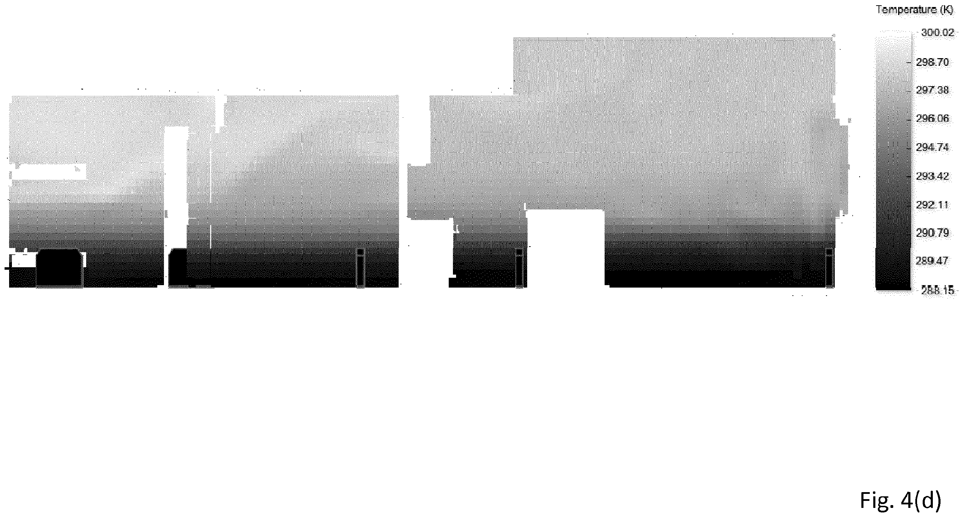

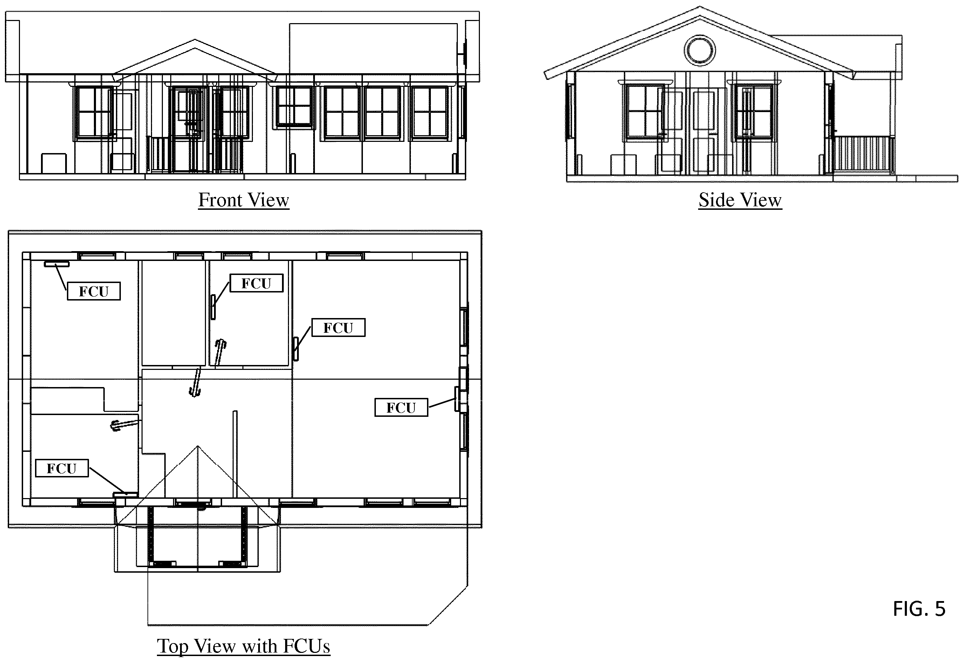

The performance of the present invention was evaluated in an exemplary house as shown in Fig. 5. Fig. 5 shows the ground plot of the house and indicates the location of five fan coil units marked as FCU in the various rooms of the house. There are four rooms with different sizes, which represent a typical living space. Each room has one or two heat emitters depending on its heat demand for maintaining a certain comfort level, that is, temperature. A result of the simulation is shown in Fig. 4. Herein, Fig. 4(a) and Fig. 4(c) show the situation using conventional fan coil units while Fig. 4(b) and Fig. 4(d) show the situation using fan coil units as shown in Fig. 1. Fig. 4(a) and Fig. 4(b) show the top cross-sectional view temperature contour, and Fig. 4(c) and Fig. 4(d) show the side cross-sectional view temperature contour.

It can be seen that the employment of fan coil units according to the present invention leads to overall higher temperatures as well as a more uniform distribution of the temperature profile. The temperature achieved by the conventional fan coil unit is about 3°C lower than that achieved by the invention, and the fan coil unit according to the invention is also able to deliver the heat much faster. Thus, the new design makes the heat delivery faster and more efficient than common heat emitters.

## Claims

1. A fan coil unit
being adapted to be mounted on a vertical wall,
the fan coil unit having a housing (1),
the housing having three outlet areas (2a, 2b, 3) through which air can be expelled from the housing (1),
the three outlet areas being arranged beside each other on a top side of the housing, one middle outlet area (3) of said outlet areas being arranged between two outer outlet areas (2a, 2b) of said outlet areas, wherein two outer outlet areas (2a, 2b) are inclined by an angle between greater than or equal 120° and smaller than or equal 160° with respect to the middle outlet area (3), the angle being the smaller angle measured between the respective outer outlet area (2a, 2b) and the middle outlet area (3),
further comprising at least one fan which is arranged in the housing (1) to blow air through the middle outlet area (3) when in operation, and further comprising at least two fans (4a, 4b) each of which is arranged to respectively blow air through one of the outer outlet areas (2a, 2b) when in operation, **characterized in**
**that** the two fans (4a, 4b) which are arranged to respectively blow air through one of the outer outlet areas (2a, 2b) are arranged such that a blowing direction of the respective fan (4a, 4b) is perpendicular to the outlet area (2a, 2b) through which the respective fan (4a, 4b) blows air when in operation or that a plane in which a propeller of the respective fan (4a, 4b) rotates is parallel to the outlet area (2a, 2b) through which the respective fan (4a, 4b) blows air when in operation.

2. Fan coil unit according to the preceding claim,
wherein the housing (1) has a flat shape with two main surfaces, the two main surfaces being arranged parallel to each other,
wherein the outlet areas (2a, 2b, 3) are arranged between the two main surfaces perpendicularly to the two main surfaces, and wherein one of the main surfaces abuts to said wall and is parallel to said wall when the fan coil unit is mounted on the vertical wall.

3. Fan coil unit according to the preceding claim,
wherein the housing (1) has two side surfaces (6a, 6b) being arranged between the two main surfaces at edges of the main surfaces,
each of said side surfaces (6a, 6b) abutting against one of the outer outlet areas,
the side surfaces (6a, 6b) being arranged perpendicularly to the middle outlet area (3).

4. Fan coil unit according to one of the preceding claims,
the housing having an inlet area,
the inlet area being arranged parallel to the middle outlet area (3) on an opposite side of the housing (1).

5. Fan coil unit according to one of the preceding claims wherein the outlet areas (2a, 2b, 3) are rectangular and have a rectangular outlet opening, the rectangular outlet opening preferably being covered by a grill.

6. Fan coil unit according to one of the preceding claims, wherein for each outer outlet area a channel is formed within the housing the channel extending between the fan (4a, 4b) and the corresponding outer outlet area through which the fan (4a, 4b) blows air when in operation, the channel being adapted to guide air from the fan towards the respective outlet area (2a, 2b, 3).

7. Fan coil unit according to one of the preceding claims, comprising an air stream heat exchanger (10), which is arranged inside the housing (1) such that air blown by the fans (4a, 4b, 4c, 4d, 4e) flows from the inlet opening via the air stream heat exchanger (10) to the outlet areas (2a, 2b, 3).

8. Fan coil unit according to one of the preceding claims comprising a radiator panel (24) being one of said main surfaces or being arranged in contact with one of the main surfaces parallel to one of the main surfaces, and
a radiator heat exchanger (22) being arranged in contact with the radiator panel (24).

9. Fan coil unit according to the preceding claim in combination with claim 7, wherein the radiator heat exchanger (22) and the air stream heat exchanger (10) are connected in series such that a heat transport medium can flow through radiator heat exchanger (22) and the air stream heat exchanger (10) one after the other.

## Patentansprüche

1. Gebläsekonvektoreinheit,
die geeignet ist, an einer vertikalen Wand befestigt zu sein,
wobei die Gebläsekonvektoreinheit ein Gehäuse (1) aufweist,
wobei das Gehäuse drei Auslassbereiche (2a, 2b, 3) aufweist, durch die Luft aus dem Gehäuse (1) ausgestoßen werden kann,
die drei Auslassbereiche nebeneinander auf einer oberen Seite des Gehäuses angeordnet sind, ein mittlerer Auslassbereich (3) der Auslassbereiche zwischen zwei äußeren Auslassbereichen (2a, 2b) der Auslassbereiche angeordnet ist, wobei zwei äußere Auslassbereiche (2a, 2b) in Bezug auf den mittleren Auslassbereich (3) um einen Winkel zwischen größer als oder gleich 120° und kleiner als oder gleich 160° geneigt sind, der Winkel der kleinere Winkel ist, der zwischen dem jeweiligen äußeren Auslassbereich (2a, 2b) und dem mittleren Auslassbereich (3) gemessen wird,
ferner aufweisend mindestens ein Gebläse, das in dem Gehäuse (1) angeordnet ist, um Luft durch den mittleren Auslassbereich (3) zu blasen, wenn es in Betrieb ist
und ferner aufweisend mindestens zwei Gebläse (4a, 4b), von denen jedes angeordnet ist, um jeweils Luft durch einen der äußeren Auslassbereiche (2a, 2b) zu blasen, wenn sie in Betrieb sind, **dadurch gekennzeichnet,**
**dass** die zwei Gebläse (4a, 4b), die angeordnet sind, um jeweils Luft durch einen der äußeren Auslassbereiche (2a, 2b) zu blasen, so angeordnet sind, dass eine Blasrichtung des jeweiligen Gebläses (4a, 4b) senkrecht zu dem Auslassbereich (2a, 2b) steht, durch den das jeweilige Gebläse (4a, 4b) Luft bläst, wenn es in Betrieb ist, oder dass eine Ebene, in der sich ein Propeller des jeweiligen Gebläses (4a, 4b) dreht, parallel zu dem Auslassbereich (2a, 2b) ist, durch den das jeweilige Gebläse (4a, 4b) Luft bläst, wenn es in Betrieb ist.

2. Gebläsekonvektoreinheit nach dem vorhergehenden Anspruch,
wobei das Gehäuse (1) eine flache Form mit zwei Hauptoberflächen aufweist, wobei die zwei Hauptoberflächen parallel zueinander angeordnet sind,
wobei die Auslassbereiche (2a, 2b, 3) zwischen den zwei Hauptoberflächen senkrecht zu den zwei Hauptoberflächen angeordnet sind, und wobei eine der Hauptoberflächen an der Wand anliegt und parallel zu der Wand ist, wenn die Gebläsekonvektoreinheit an der vertikalen Wand befestigt ist.

3. Gebläsekonvektoreinheit nach dem vorhergehenden Anspruch,
wobei das Gehäuse (1) zwei Seitenoberflächen (6a, 6b) aufweist, die zwischen den zwei Hauptoberflächen an Rändern der Hauptoberflächen angeordnet sind,
wobei jede der Seitenoberflächen (6a, 6b) an einem der äußeren Auslassbereiche anliegt,
wobei die Seitenoberflächen (6a, 6b) senkrecht zu dem mittleren Auslassbereich (3) angeordnet sind.

4. Gebläsekonvektoreinheit nach einem der vorhergehenden Ansprüche,
wobei das Gehäuse einen Einlassbereich aufweist,
wobei der Einlassbereich auf einer gegenüberliegenden Seite des Gehäuses (1) parallel zu dem mittleren Auslassbereich (3) angeordnet ist.

5. Gebläsekonvektoreinheit nach einem der vorhergehenden Ansprüche, wobei die Auslassbereiche (2a, 2b, 3) rechteckig sind und eine rechteckige Auslassöffnung aufweisen, wobei die rechteckige Auslassöffnung vorzugsweise durch ein Gitter abgedeckt ist.

6. Gebläsekonvektoreinheit nach einem der vorhergehenden Ansprüche, wobei für jeden äußeren Auslassbereich ein Kanal im Gehäuse ausgebildet ist, wobei sich der Kanal zwischen dem Gebläse (4a, 4b) und dem entsprechenden äußeren Auslassbereich erstreckt, durch den das Gebläse (4a, 4b) Luft bläst, wenn es in Betrieb ist, wobei der Kanal geeignet ist, Luft vom Gebläse in Richtung des jeweiligen Auslassbereichs (2a, 2b, 3) zu leiten.

7. Gebläsekonvektoreinheit nach einem der vorhergehenden Ansprüche, aufweisend einen Luftstrom-Wärmetauscher (10), der innerhalb des Gehäuses (1) angeordnet ist, so dass Luft, die von den Gebläsen (4a, 4b, 4c, 4d, 4e) geblasen wird, von der Einlassöffnung über den Luftstrom-Wärmetauscher (10) zu den Auslassbereichen (2a, 2b, 3) strömt.

8. Gebläsekonvektoreinheit nach einem der vorhergehenden Ansprüche, aufweisend eine Radiatorplatte (24), die eine der Hauptoberflächen ist oder in Kontakt mit einer der Hauptoberflächen parallel zu einer der Hauptoberflächen angeordnet ist, und
einen Radiator-Wärmetauscher (22), der in Kontakt mit der Radiatorplatte (24) angeordnet ist.

9. Gebläsekonvektoreinheit nach dem vorhergehenden Anspruch in Kombination mit Anspruch 7, wobei der Radiator-Wärmetauscher (22) und der Luftstrom-Wärmetauscher (10) so in Reihe verbunden sind, dass ein Wärmetransportmedium nacheinander durch den Radiator-Wärmetauscher (22) und den Luftstrom-Wärmetauscher (10) strömen kann.

## Revendications

1. Unité de ventilo-convecteur
étant adaptée pour être monté sur une paroi verticale,
l'unité de ventilo-convecteur ayant un boîtier (1),
le boîtier présentant trois zones de sortie (2a, 2b, 3) par lesquelles l'air peut être expulsé du boîtier (1),
les trois zones de sortie étant disposées côte à côte sur un côté supérieur du boîtier, une zone de sortie médiane (3) desdites zones de sortie étant disposée entre deux zones de sortie externes (2a, 2b) desdites zones de sortie, dans lequel deux zones de sortie externes (2a, 2b) sont inclinées selon un angle compris entre un angle supérieur ou égal à 120° et un angle inférieur ou égal à 160° par rapport à la zone de sortie médiane (3), l'angle étant le plus petit angle mesuré entre la zone de sortie externe respective (2a, 2b) et la zone de sortie médiane (3),
comprenant en outre au moins un ventilateur qui est agencé dans le boîtier (1) pour souffler de l'air à travers la zone de sortie médiane (3) lorsqu'il est en fonctionnement,
et comprenant en outre au moins deux ventilateurs (4a, 4b) dont chacun est disposé pour souffler respectivement de l'air à travers l'une des zones de sortie externes (2a, 2b) lorsqu'il est en fonctionnement, **caractérisé en ce que**
les deux ventilateurs (4a, 4b) qui sont agencés pour souffler respectivement de l'air à travers l'une des zones de sortie externes (2a, 2b) sont disposés de telle sorte qu'une direction de soufflage du ventilateur respectif (4a, 4b) est perpendiculaire à la zone de sortie (2a, 2b) à travers laquelle le ventilateur respectif (4a, 4b) souffle de l'air lorsqu'il est en fonctionnement ou qu'un plan dans lequel une hélice du ventilateur respectif (4a, 4b) tourne est parallèle à la zone de sortie (2a, 2b) à travers laquelle le ventilateur respectif (4a, 4b) souffle de l'air lorsqu'il est en fonctionnement.

2. Unité de ventilo-convecteur selon la revendication précédente,
dans lequel le boîtier (1) a une forme plate avec deux surfaces principales, les deux surfaces principales étant disposées parallèlement l'une à l'autre,
dans lequel les zones de sortie (2a, 2b, 3) sont agencées entre les deux surfaces principales perpendiculairement aux deux surfaces principales, et dans lequel l'une des surfaces principales est en butée contre ladite paroi et est parallèle à ladite paroi lorsque le ventilo-convecteur est monté sur la paroi verticale.

3. Unité de ventilo-convecteur selon la revendication précédente,
dans lequel le boîtier (1) présente deux surfaces latérales (6a, 6b) agencées entre les deux surfaces principales au niveau des bords des surfaces principales,
chacune desdites surfaces latérales (6a, 6b) venant en butée contre l'une des zones de sortie externes,
les surfaces latérales (6a, 6b) étant disposées perpendiculairement à la zone de sortie médiane (3).

4. Unité de ventilo-convecteur selon l'une des revendications précédentes,
le boîtier ayant une zone d'entrée,
la zone d'entrée étant agencée parallèlement à la zone de sortie médiane (3) sur un côté opposé du boîtier (1).

5. Unité de ventilo-convecteur selon l'une des revendications précédentes, dans lequel les zones de sortie (2a, 2b, 3) sont rectangulaires et présentent une ouverture de sortie rectangulaire, l'ouverture de sortie rectangulaire étant de préférence recouverte par une grille.

6. Unité de ventilo-convecteur selon l'une des revendications précédentes, dans lequel pour chaque zone de sortie externe, un canal est formé à l'intérieur du boîtier, le canal s'étendant entre le ventilateur (4a, 4b) et la zone de sortie externe correspondante à travers laquelle le ventilateur (4a, 4b) souffle de l'air lorsqu'il est en fonctionnement, le canal étant adapté pour guider l'air du ventilateur vers la zone de sortie respective (2a, 2b, 3).

7. Unité de ventilo-convecteur selon l'une des revendications précédentes, comprenant un échangeur de chaleur à courant d'air (10), qui est agencé à l'intérieur du boîtier (1) de telle sorte que l'air soufflé par les ventilateurs (4a, 4b, 4c, 4d, 4e) s'écoule de l'ouverture d'entrée vers les zones de sortie (2a, 2b, 3) en passant par l'échangeur de chaleur à courant d'air (10).

8. Unité de ventilo-convecteur selon l'une des revendications précédentes comprenant un panneau de radiateur (24) étant l'une desdites surfaces principales ou étant agencé en contact avec l'une des surfaces principales parallèlement à l'une des surfaces principales, et
un échangeur de chaleur de radiateur (22) étant disposé en contact avec le panneau de radiateur (24).

9. Unité de ventilo-convecteur selon la revendication précédente en combinaison avec la revendication 7, dans lequel l'échangeur de chaleur de radiateur (22) et l'échangeur de chaleur à courant d'air (10) sont connectés en série de telle sorte qu'un milieu de transport de chaleur peut circuler à travers l'échangeur de chaleur de radiateur (22) et l'échangeur de chaleur de flux d'air (10) l'un après l'autre.
